Europäisches Patentamt

European Patent Office

Office européen des brevets

(19)

(11) Numéro de publication : **0 144 254**
**B1**

(12) **FASCICULE DE BREVET EUROPÉEN**

(45) Date de publication du fascicule du brevet :
04.05.88

(21) Numéro de dépôt : **84401931.5**

(22) Date de dépôt : **27.09.84**

(51) Int. Cl.⁴ : **F 23 L 17/04**, F 23 L 15/04,
F 24 C 3/00, F 24 H 1/44

(54) **Dispositif d'évacuation dans l'air ambiant des produits de combustion d'une chaudière à condensation.**

(30) Priorité : 30.09.83 FR 8315657

(43) Date de publication de la demande :
12.06.85 Bulletin 85/24

(45) Mention de la délivrance du brevet :
04.05.88 Bulletin 88/18

(84) Etats contractants désignés :
AT BE CH DE GB IT LI LU NL SE

(56) Documents cités :
FR-A- 1 388 768
FR-A- 2 137 187
FR-A- 2 345 668
FR-A- 2 432 681
FR-A- 2 459 437
FR-A- 2 513 360
GB-A- 925 772
GB-A- 947 114
GB-A- 2 112 517
US-A- 2 711 683
US-A- 3 115 852

(73) Titulaire : GAZ DE FRANCE
23, rue Philibert Delorme
F-75017 Paris (FR)

(72) Inventeur : Couprie, François
30 rue des Haies
F-75020 Paris (FR)

(74) Mandataire : Thevenet, Jean-Bruno et al
Cabinet BEAU DE LOMENIE 55 rue d'Amsterdam
F-75008 Paris (FR)

EP 0 144 254 B1

Jouve, 18, rue St-Denis, 75001 Paris, France

## Description

La présente invention a pour objet un dispositif d'évaluation dans l'air ambiant des produits de combustion d'une chaudière à condensation, dans lequel au moins un tronçon aval du conduit d'évacuation des produits de combustion est coaxial au conduit d'admission de l'air comburant nécessaire au brûleur et une fraction de l'air capté dans le conduit d'admission est renvoyée vers l'extérieur.

Une chaudière à condensation vise à utiliser au maximum l'énergie de combustion du gaz, en refroidissant le plus possible les fumées provenant de la combustion. On sait en effet que le rendement d'une chaudière est d'autant meilleur que la température de sortie des produits de combustion est plus basse et que donc la quantité de chaleur emportée par ces fumées est plus faible. Compte tenu du fait que les produits de combustion contiennent du gaz carbonique et de l'eau, dans une chaudière à condensation, on vise à abaisser la température des produits de combustion au-dessous de la température de rosée afin de permettre une condensation d'une partie de l'eau contenue dans ces produits de combustion et libérer par là-même de la chaleur récupérable.

Dans une chaudière à condensation, la surface de l'échangeur entre les fumées et l'eau à chauffer est augmentée, ou un deuxième échangeur récupérateur entre les fumées et l'eau à chauffer est adjoint à l'échangeur principal. La température de sortie des produits de combustion reste par construction un peu supérieure à la température d'entrée de l'eau à réchauffer (eau sanitaire ou venant d'un circuit des radiateurs). Par suite, les produits de combustion sont souvent évacués de la chaudière à une température telle qu'une partie de l'énergie totale théoriquement récupérable est perdue.

Un exemple de chaudière à condensation est décrit par exemple dans le document US-A-3 115 852. Selon ce document toutefois, il n'est pas prévu de renvoyer vers l'extérieur une partie de l'air capté dans le conduit d'admission d'air coaxial au conduit d'évacuation des fumées luimême constitué par une cheminée classique verticale.

Par ailleurs, dans une chaudière à condensation, les produits de combustion étant refroidis jusqu'à saturation au moment de leur rejet dans l'atmosphère, ce rejet s'accompagne, dans une atmosphère relativement froide, d'un panache de vapeur de plusieurs mètres de longueur qui est particulièrement inesthétique lorsque le point de sortie des fumées est situé sur un mur d'habitation par exemple.

Le document FR-A-2 345 668 décrit une ventouse d'entrée d'air comburant et d'évacuation de produits de combustion dans laquelle de l'air est susceptible de se mélanger aux produits de combustion, mais ne provient pas d'une conduite d'admission d'air coaxiale au tuyau d'évacuation des produits de combustion, et la ventouse est destinée à fonctionner avec un appareil de chauffage au gaz qui n'est pas spécifiquement une chaudière à condensation.

La présente invention vise précisément à atténuer et même supprimer le panache de vapeur lors du rejet, dans l'atmosphère, des produits de combustion issus d'une chaudière à condensation tout en assurant une amélioration du rendement de la chaudière pour une température donnée d'eau de circulation, ou, pour un même rendement, en relevant de plusieurs degrés la température de cette eau.

Ces buts sont atteints grâce à un dispositif d'évacuation dans l'air ambiant des produits de combustion d'une chaudière à condensation du type mentionné en tête de la description, caractérisé en ce que les moyens de renvoi vers l'extérieur d'une fraction de l'air capté comprennent un tube central coaxial et intérieur au tronçon aval du conduit d'évacuation des produits de combustion et le conduit d'admission de l'air comburant entoure ledit tronçon aval du conduit d'évacuation des produits de combustion, qu'il comprend des moyens de renvoi vers l'extérieur d'une fraction de l'air capté dans ledit conduit d'admission, en ce que le tronçon aval du conduit d'évacuation des produits de combustion, le tronçon coaxial du conduit d'admission et les moyens de renvoi vers l'extérieur d'une fraction de l'air capté définissent un premier échangeur de chaleur et en ce qu'il comprend en outre des moyens de dilution des produits de combustion avec ladite fraction de l'air capté, lesdits moyens de dilution étant situés au voisinage de la bouche d'aspiration de l'air comburant et de rejet des produits de combustion dans l'air ambiant.

De façon plus particulière, le premier échangeur de chaleur comprend ledit tube central, un tube intermédiaire en métal bon conducteur de la chaleur qui constitue ledit tronçon aval du conduit d'évacuation des produits de combustion, un tube extérieur constituant ledit conduit d'admission d'air comburant et des ailettes longitudinales s'étendant radialement de part et d'autre du tube intermédiaire.

Selon un premier mode de réalisation de l'invention, lesdits moyens de dilution comprennent un carénage gaufré ou cône perforé disposé à la sortie du tube central, entre celui-ci et le conduit d'évacuation des produits de combustion, pour permettre à la fraction d'air renvoyée vers l'extérieur de pénétrer dans la zone de circulation des produits de combustion.

Selon un autre mode de réalisation de l'invention, lesdits moyens de dilution comprennent un venturi de mélange formé à la sortie du conduit d'évacuation des produits de combustion et agissant sur les deux faces du jet gazeux annulaire constitué par les produits de combustion, de manière à permettre l'entraînement par aspiration de l'air renvoyé par le tube central.

Selon une autre caractéristique avantageuse, le dispositif selon l'invention comprend en outre un second échangeur de chaleur entre les produits de combustion issus de la chaudière et l'air comburant réchauffé dans le premier échangeur de chaleur, et le second échangeur de chaleur est du type à ruissellement d'eau pour augmenter l'humidité de l'air tiède de combustion déjà réchauffé.

Des moyens sont associés au premier échangeur de chaleur, au voisinage de la sortie du conduit d'évacuation des produits de combustion, pour recueillir les condensats formés dans ce dernier et les renvoyer dans le second échangeur de chaleur pour constituer l'eau de ruissellement destinée à augmenter l'humidité de l'air de combustion préchauffé.

De façon plus particulière, le second échangeur de chaleur comprend un tube extérieur constitué par une partie du conduit d'amenée d'air au brûleur de la chaudière, et un tube intérieur coaxial constitué par une partie du conduit d'évacuation des gaz de combustion, la face externe du tube intérieur est recouverte d'un matériau poreux et hygrophile permettant à l'eau de condensation de ruisseler et le tube intérieur est constitué d'un métal bon conducteur de la chaleur et est garni intérieurement d'ailettes longitudinales ou de chicanes.

Selon une caractéristique particulière, un ventilateur de circulation est disposé à l'extrémité du premier échangeur de chaleur sur le trajet du conduit d'admission de l'air et les moyens de séparation entre l'air comburant destiné au brûleur et la fraction d'air destinée à constituer l'air de dilution sont situés à la sortie du ventilateur.

Selon une application avantageuse de l'invention, le premier échangeur de chaleur et les moyens de dilution associés sont disposés à l'emplacement d'une ventouse reliant la chaudière à l'atmosphère extérieure, sur une façade de bâtiment.

D'autres caractéristiques et avantages de l'invention ressortiront de la description qui fait suite de modes particuliers de réalisation, donnés à titre d'exemple, en référence au dessin annexé, sur lequel :
— la figure 1 est une vue schématique en coupe d'un premier mode de réalisation de l'invention,
— la figure 2 est une vue en coupe montrant une section du premier échangeur de chaleur, selon la ligne II-II de la figure 1,
— la figure 3 est une vue en coupe montrant une section du second échangeur de chaleur, selon la ligne III-III de la figure 1,
— la figure 4 est une vue en coupe montrant une section d'un premier mode de réalisation de moyens de dilution, selon la ligne IV-IV de la figure 1,
—. la figure 5 est une vue schématique en coupe d'un second mode de réalisation de l'invention.

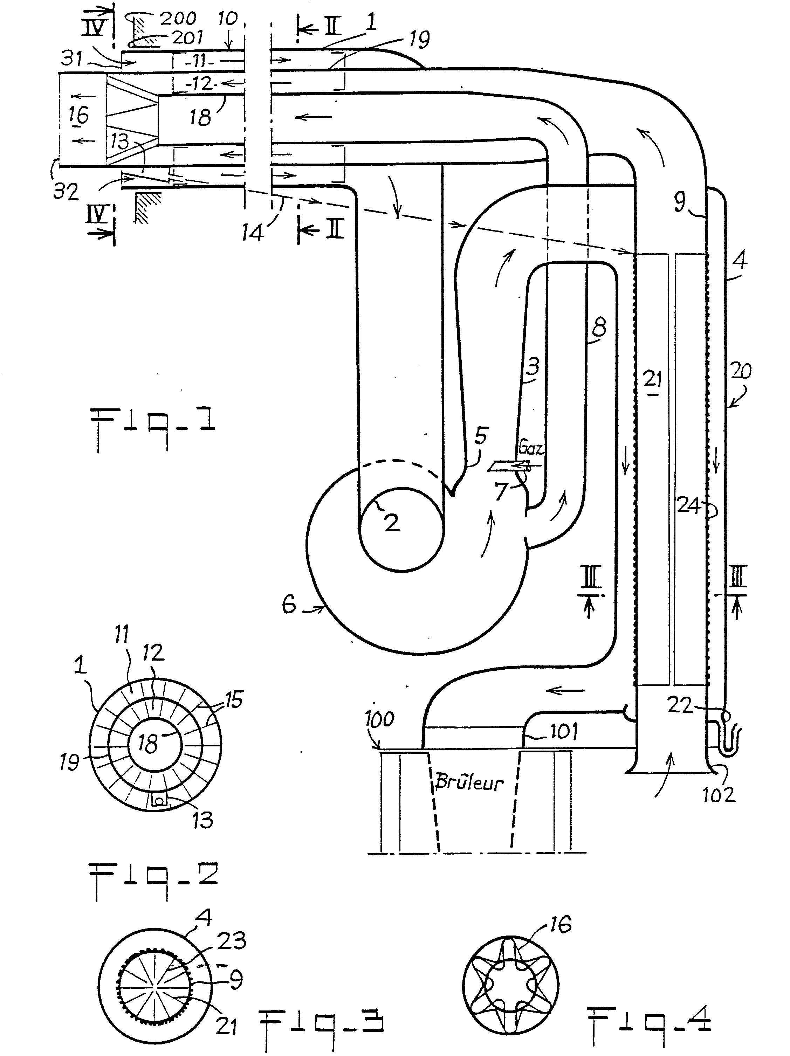

On voit sur la figure 1 un dispositif conforme à l'invention qui comporte une conduite 9, 19 d'évacuation des gaz de combustion d'une chaudière 100, et une conduite 1, 3, 4 d'alimentation de la chaudière 100 en air comburant. L'extrémité inférieure de la conduite verticale 9 est raccordée à un orifice 102 de la chaudière 100 tandis que l'extrémité 32 du tronçon horizontal aval 19 de la conduite d'évacuation des produits de combustion débouche dans l'atmosphère à travers une ouverture 201 de la paroi 200 du bâtiment où se trouve la chaudière 100. La conduite 1 d'admission d'air comburant présente une première partie horizontale qui prend naissance par son extrémité libre 31 à travers l'ouverture 201 et entoure le tronçon horizontal aval 19, puis débouche par son extrémité 2 dans un ventilateur 6 qui renvoie, par une conduite 3 et une conduite verticale 4 entourant la conduite 9 d'évacuation des gaz de combustion, de l'air qui pénètre par un orifice 101 de la chaudière pour alimenter le brûleur à air soufflé incorporé dans celle-ci.

A la sortie du ventilateur 6, une conduite de dérivation prolongée par un tronçon horizontal 18 situé de façon coaxiale au centre du tronçon de conduite 19, renvoie une partie de l'air capté par l'orifice d'entrée annulaire 31 vers un dispositif 16 de dilution de l'air avec les gaz de combustion avant le rejet de ceux-ci dans l'atmosphère par la bouche 32.

Dans le mode de réalisation de la figure 1, à la sortie du ventilateur 6, le tronçon de conduite 3 servant à l'alimentation en air du brûleur forme un venturi 5 au niveau duquel il aspire la quantité de gaz combustible nécessaire qui est délivrée par un conduit d'alimentation 7.

Le dispositif représenté sur la figure 1 définit essentiellement un premier échangeur de chaleur 10 et un second échangeur de chaleur 20.

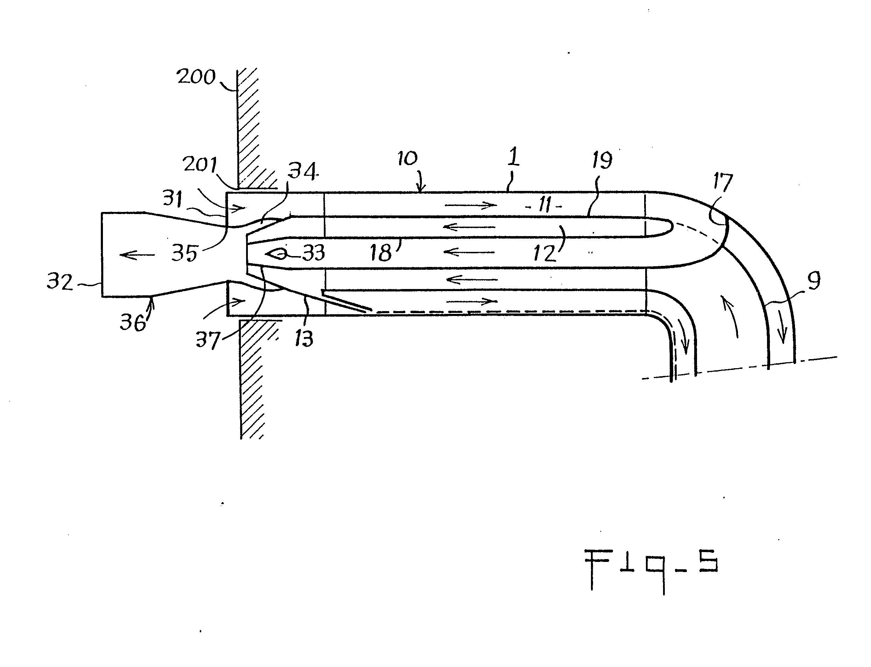

Le premier échangeur de chaleur 10 est constitué essentiellement par le tronçon horizontal 1 du tube d'admission d'air qui débouche dans l'atmosphère en définissant une ouverture annulaire 31, par le tronçon horizontal 19 du conduit d'évacuation des produits de combustion et par le tronçon horizontal 18 de la conduite de renvoi d'une fraction de l'air capté par l'orifice annulaire 31, ces trois tronçons de tube étant coaxiaux. Dans l'échangeur de chaleur 10, le tube intermédiaire 19 est constitué en un métal bon conducteur de la chaleur et porte sur ses deux faces des ailettes longitudinales 15 qui sont réparties sur toute la périphérie du tube 19 (voir figure 2).

L'intervalle le plus externe 11 délimité par le tube externe horizontal 1 et le tronçon horizontal du tube médian 19 sert à l'entrée de l'air frais qui est progressivement échauffé par les ailettes. L'espace annulaire 12 délimité par le tronçon horizontal du tube médian 19 et le tube interne 18 sert à la sortie des fumées humides provenant du conduit 9, qui se refroidissent en condensant une partie de leur vapeur. Les condensats formés sont recueillis par un collecteur 13.

L'air qui s'est réchauffé dans l'espace annulaire externe 11 de l'échangeur 10 est repris par le ventilateur 6. Une partie de cet air sec et réchauffé est renvoyée par la conduite de dérivation 8 dans le tube central 18 de l'échangeur 10 à la sortie duquel il se mélange avec les produits de combustion issus de l'espace 12 grâce à un carénage gaufré 16 de forme générale tronconique (figure 4) qui relie l'extrémité du tube interne 18 à la sortie du tube d'évacuation des fumées 19 et permet un brassage efficace de l'air et des fumées qui facilite la dilution des produits de combustion dans l'air et, du fait que le mélange des produits de combustion s'effectue avec de l'air tiède et sec empêche la formation d'un panache de vapeur d'eau à l'extérieur du mur 200.

Le deuxième échangeur de chaleur 20 comprend essentiellement un tube vertical extérieur 4 raccordé au tronçon de conduite 3 et le tube vertical interne 9 d'évacuation des produits de combustion. Ce dernier est en métal bon conducteur de la chaleur et est garni intérieurement d'ailettes longitudinales 21, 23 (figure 3) sur lesquelles se produit une condensation partielle. Les condensats retombent dans la chaudière d'où ils sont évacués à l'égout.

La face externe du tube interne 9 est recouverte d'un matériau poreux et hygrophile 24. L'eau de condensation de l'échangeur 10 recueillie par la gouttière 13 est dirigée par la canalisation 14 au sommet de l'échangeur 20 sur la face externe du tube central 9, où elle ruisselle doucement en formant une lame d'eau chaude mince et continue, ce qui contribue à enrichir en humidité l'air réchauffé dans l'échangeur 10 qui circule entre les tubes externe 4 et interne 9 de l'échangeur 20. L'eau éventuellement en excès dans l'échangeur 20 est recueillie et séparée du flux de mélange air-gaz humide et va rejoindre les trop-pleins 22. Le mélange air-gaz réchauffé et humidifié va ensuite directement au brûleur de la chaudière.

En résumé, le dispositif de la figure 1 comporte deux échangeurs air/fumées distincts 10 et 20 sur le parcours des fumées après le dernier échangeur fumées/eau situé dans la chaudière 100. L'échangeur final 10 sert à réchauffer de l'air frais en refroidissant les fumées pour abaisser le plus possible leur teneur en eau. L'air réchauffé est repris par le ventilateur de circulation 6, à la sortie duquel une partie est renvoyée, par les conduits 8 ; 18, directement vers la sortie pour diluer les fumées refroidies tandis que l'autre partie est mélangée au gaz de combustion et va au brûleur après avoir traversé l'échangeur 20. Dans l'échangeur 20, les fumées brutes cèdent une partie de leur chaleur qui sert à vaporiser l'eau recueillie dans l'échangeur 10 afin d'enrichir en humidité l'air déjà réchauffé. Ceci permet d'améliorer le rendement pratique de la chaudière en relevant de plusieurs degrés la température de rosée des fumées. Il se produit une certaine auto-régulation dans le fonctionnement en cascade des deux échangeurs par le transfert d'énergie de l'un à l'autre sous la forme de l'eau condensée, puis re-vaporisée. Naturellement, les parties d'échangeur dont la paroi externe est à une température supérieure à celle de l'ambiance doivent être calorifugées.

A titre d'exemple de fonctionnement, si l'air atmosphérique extérieur introduit par la bouche 31 est à une température de l'ordre de 0 °C et si les produits de combustion sortent de la chaudière par l'orifice 102 à une température de l'ordre de 55 °C, on pourra disposer entre l'échangeur 10 et l'échangeur 20 de produits de combustion à une température de l'ordre de 48 °C et d'air sec à environ 35 °C. L'air sec qui servira à diluer les produits de combustion au niveau du dispositif 16 sera ainsi à une température voisine de celle des produits de combustion rejetés dans l'atmosphère, ce qui évitera de façon sûre la formation d'un panache de vapeur. Par ailleurs, au niveau de l'orifice 101 d'accès au brûleur, l'air carburé et saturé d'eau conserve une température de l'ordre d'environ 35 °C et contribue à une augmentation du rendement global par élévation de la température de rosée des fumées.

Le dispositif de la figure 1 peut cependant subir de nombreuses variantes. Par exemple, l'air sortant du ventilateur et allant vers le brûleur peut passer d'abord par l'échangeur-humidificateur 20 avant d'être mélangé au gaz de combustion ; on minimise ainsi les transformations à apporter à certains modèles de chaudières existants.

La figure 5 montre un second mode de réalisation du dispositif de dilution des produits de combustion dans l'air, qui s'adapte à la sortie d'un échangeur 10 tout à fait analogue à l'échangeur 10 de la figure 1.

Comme on peut le voir sur la figure 5, le tronçon aval 19 du conduit d'évacuation des produits de combustion se prolonge par un venturi de mélange 36 présentant un col 35, qui est raccordé sur la face extérieure de l'extrémité de conduit 19. Le conduit 19 d'évacuation des produits de combustion présente lui-même une extrémité convergente 34 se terminant au niveau du col de venturi 35. Le tube central 18 par lequel est renvoyée une fraction de l'air capté par la bouche 31, après réchauffement dans l'échangeur 10, se termine également par une partie convergente 37, où débouchent plusieurs tubes à section profilée 33 permettant à une partie de l'air tiède de passer sur la face externe du convergent 34. De la sorte, l'ensemble 36 formant venturi de mélange agit sur les deux faces du jet gazeux annulaire constitué par les produits de combustion et l'énergie cinétique de ces produits de combustion est utilisée pour aspirer l'air tiède de dilution issu du tube central 18. Ce dispositif s'adapte directement sur une chaudière existante, sans autre modification qu'une augmentation de la puissance du ventilateur. On élimine ainsi le panache, mais sans affecter le rendement de la chaudière.

Dans le cas du mode de réalisation de la figure 5, les condensats formés dans l'échangeur 10 peuvent être simplement dirigés par la gouttière 13 dans le fond du conduit 1 pour être ensuite évacués à l'égout avec les condensats de la chaudière.

**Revendications**

1. Dispositif d'évacuation dans l'air ambiant des produits de combustion d'une chaudière à condensation, dans lequel au moins un tronçon aval (19) du conduit (9) d'évacuation des produits de combustion est coaxial au conduit (1) d'admission de l'air comburant nécessaire au brûleur, et une fraction de l'air capté dans ledit conduit d'admission (1) est renvoyée vers l'extérieur, caractérisé en ce que les moyens (8, 18) de renvoi vers l'extérieur d'une fraction de l'air capté comprennent un tube central (18) coaxial et intérieur au tronçon aval (19) du conduit (9, 19) d'évacuation des produits de combustion en ce que le conduit (1) d'admission de l'air comburant entoure ledit tronçon aval (19) du conduit d'évacuation (9, 19) des produits de combustion, en ce que le tronçon aval (19) du conduit (9) d'évacuation des produits de combustion, le tronçon coaxial du conduit d'admission (1) et les moyens (18) de renvoi vers l'extérieur d'une fraction de l'air capté définissent un premier échangeur de chaleur (10), et en ce qu'en outre des moyens (16 ; 36) de dilution des produits de combustion avec ladite fraction de l'air capté sont situés au voisinage de la bouche d'aspiration (31) de l'air comburant et de rejet (32) des produits de combustion dans l'air ambiant.

2. Dispositif selon la revendication 1, caractérisé en ce que le premier échangeur de chaleur (10) comprend ledit tube central (18), un tube intermédiaire (19) en métal bon conducteur de la chaleur qui constitue ledit tronçon aval du conduit (9) d'évacuation des produits de combustion, un tube extérieur (1) constituant ledit conduit d'admission d'air comburant et des ailettes longitudinales (15) s'étendant radialement de part et d'autre du tube intermédiaire (19).

3. Dispositif selon l'une quelconque des revendications 1 et 2, caractérisé en ce que lesdits moyens de dilution comprennent un cône perforé (16) disposé à la sortie du tube central (18), entre celui-ci et le conduit (19) d'évacuation des produits de combustion, pour permettre à la fraction d'air renvoyée vers l'extérieur de pénétrer dans la zone de circulation des produits de combustion.

4. Dispositif selon l'une quelconque des revendications 1 à 3, caractérisé en ce qu'il comprend en outre un second échangeur de chaleur (20) entre les produits de combustion issus de la chaudière et l'air comburant réchauffé dans le premier échangeur de chaleur (10), et en ce que le second échangeur de chaleur (20) est du type à ruissellement d'eau pour augmenter l'humidité de l'air de combustion déjà réchauffé.

5. Dispositif selon la revendication 4, caractérisé en ce que des moyens (13, 14) sont associés au premier échangeur de chaleur (10), au voisinage de la sortie du conduit d'évacuation des produits de combustion, pour recueillir les condensats formés dans ce dernier et les renvoyer dans le second échangeur de chaleur (20) pour constituer l'eau de ruissellement destinée à augmenter l'humidité de l'air de combustion préchauffé.

6. Dispositif selon la revendication 5, caractérisé en ce que le second échangeur de chaleur (20) comprend un tube extérieur (4) constitué par une partie du conduit d'amenée d'air au brûleur de la chaudière (100), et un tube intérieur (9) coaxial constitué par une partie du conduit (9, 19) d'évacuation des gaz de combustion, en ce que la face externe du tube intérieur (9) est recouverte d'un matériau poreux et hygrophile (24) permettant à l'eau de condensation de ruisseler et en ce que le tube intérieur (9) est constitué d'un métal bon conducteur de la chaleur et est garni intérieurement d'ailettes longitudinales (21, 23) ou de chicanes.

7. Dispositif selon l'une quelconque des revendications 1 à 6, caractérisé en ce qu'un ventilateur de circulation (6) est disposé à l'extrémité du premier échangeur de chaleur (10) sur le trajet du conduit (1, 2, 3) d'admission de l'air et en ce que les moyens (8, 18) de séparation entre l'air comburant destiné au brûleur et la fraction d'air destinée à constituer l'air de dilution sont situés à la sortie du ventilateur (6).

8. Dispositif selon l'une quelconque des revendications 1 et 2, caractérisé en ce que lesdits moyens de dilution comprennent un venturi de mélange (36) formé à la sortie du conduit (19) d'évacuation des produits de combustion et agissant sur les deux faces du jet gazeux annulaire constitué par les produits de combustion, de manière à permettre l'entraînement par aspiration de l'air renvoyé dans le tube central (18).

9. Dispositif selon l'une quelconque des revendications 1 à 8, caractérisé en ce que le premier échangeur de chaleur (10) et les moyens de dilution (16 ; 36) associés sont disposés à l'emplacement d'une ventouse reliant la chaudière (100) à l'atmosphère extérieure, sur une façade de bâtiment.

**Claims**

1. Device for evacuating into the ambient air combustion products from a condensation boiler, in which at least one downstream section (19) of the conduit (9) for evacuating the combustion products is coaxial to the conduit (1) for admission of the combustion air necessary for the burner, and a fraction of the air collected in said admission conduit (1) is returned towards the outside, characterized in that the means (8, 18) for returning a fraction of the collected air to the outside comprise a central tube (18), coaxial and internal to the downstream section (19) of the conduit (9, 19) for evacuating the combustion products, in that the conduit (1) for admission of the combustion air surrounds said downstream section (19) of the conduit (9, 19) for evacuating the combustion products, in that the downstream section (19) of the conduit (9) for evacuating the combustion products, the coaxial section of the admission conduit (1) and the means (18) for returning to the outside a fraction of the collected air define a first heat exchanger (10), and in that means (16, 36) for diluting the combustion products with said fraction of collected air are further provided, and situated in the vicinity of the opening (31) for suction of the combustion air and for rejection (32) of the combustion products into the ambient air.

2. Device according to claim 1, characterized in that the first heat exchanger (10) comprises said central tube (18), and intermediate tube (19) made of a good heat-conducting metal which constitutes said downstream section of the conduit (9) for evacuating the combustion products, an outer tube (1) constituting said combustion air admission conduit and longitudinal fins (15) extending radially on either side of the intermediate tube (19).

3. Device according to any one of claims 1 and 2, characterized in that said dilution means comprise a perforated cone (16) disposed at the outlet of the central tube (18), between the latter and the conduit (19) for evacuating the combustion products, to enable the fraction of air returned to the outside to penetrate into the zone of circulation of the combustion products.

4. Device according to any one of claims 1 to 3, characterized in that it further comprises a second heat exchanger, (20) between the combustion products issuing from the boiler and the combustion air reheated in the first heat exchanger (10), and in that the second heat exchanger (20) is of the trickling water type to increase the humidity of the combustion air already reheated.

5. Device according to claim 4, characterized in that the means (13, 14) are associated with the first heat exchanger (10), in the vicinity of the outlet of the conduit for evacuating the combustion products, to collect the condensates formed in said conduit and to return them into the second heat exchanger (20) to constitute the trickling water intended to increase the humidity of the preheated combustion air.

6. Device according to claim 5, characterized in that the second heat exchanger (20) comprises an outer tube (4) constituted by a part of the conduit conducting air to the burner of the boiler (100), and a coaxial inner tube (9) constituted by a part of the conduit (9, 19) for evacuating the combustion gases, in that the outer face of the inner tube (9) is covered with a porous, hygrophilic material (24) allowing the condensation water to trickle, and in that the inner tube (9) is made of a good heat-conducting metal and is internally provided with longitudinal ribs (21, 23) or baffles.

7. Device according to any one of claims 1 to 6, characterized in that a circulation fan (6) is disposed at the end of the first heat exchanger (10) on the path of the air admission conduit (1, 2, 3) and in that the means (8, 18) for separation between the combustion air intended for the burner and the fraction of air intended to constitute the dilution air are located at the outlet of the fan (6).

8. Device according to any one of claims 1 and 2, characterized in that said dilution means comprise a mixing venturi (36) formed at the outlet of the conduit (19) for evacuating the combustion products and acting on the two faces of the annular gaseous jet constituted by the combustion products, so as to allow to carry away by suction the air returned in the central tube (18).

9. Device according to any one of claims 1 to 8, characterized in that the first heat exchanger (10) and the dilution means (16 ; 36) associated therewith are disposed at the location of a vent connecting the boiler (100) to the outside atmosphere, on the façade of a building.

**Patentansprüche**

1. Vorrichtung zum Abführen der Verbrennungsprodukte eines Kondensationsheizkessels in die Umgebungsluft, bei dem zumindest ein stromabwärts gelegenes Stück (19) der Leitung (9) zur Evakuierung der Verbrennungsprodukte koaxial zu einer Zuführungsleitung (1), für die dem Brenner notwendige Verbrennungsluft, verläuft ; und bei dem ein Teil der in dieser Zuführungsleitung (1) enthaltenen Luft wieder nach außen geführt wird, dadurch gekennzeichnet, daß die Mittel (8, 18) zum Rückführen ins Äußere eines Teils der Luft, ein Zentralrohr (18), welches koaxial innerhalb eines stromabwärts gelegenen Abschnittes (19) der Leitung (9, 19), die die Verbrennungsprodukte evakuiert, befindlich ist, umfassen, und daß die Verbrennungsluft-Zuleitung (1) den genannten stromabwärts gelegenen Teil (19) der Evakuierungsleitung (9, 19) der Verbrennungsprodukte umhüllt, daß der stromabwärts gelegene Teil (19) der Leitung (9) zur Evakuierung der Verbrennungsprodukte, der Teil, der koaxial zur Zuleitung (1) liegt, und die Mittel (18), die einen Teil der Luft nach außen führen, einen ersten Wärmetauscher (10) bilden, und daß weiters Mittel (16, 36) zur Verdünnung der Verbrennungsprodukte mit dem genannten Teil der Luft in Nachbarschaft der Ansaugöffnung (31) der Verbrennungsluft und des Auslasses (32) der Verbrennungsprodukte in die Umgebungsluft angeordnet sind.

2. Vorrichtung nach Anspruch 1, dadurch gekennzeichnet, daß der erste Wärmetauscher (10) das genannte Zentralrohr (18), ein Zwischenrohr (19) aus Metall, welches ein guter Wärmeleiter ist und den genannten stromabwärts gelegenen Teil der Leitung (9) zur Evakuierung der Verbrennungsprodukte bildet, ein Außenrohr (1), das die genannte Leitung zur Zufuhr der Verbrennungsluft bildet, und längliche Flügel (15), die sich radial zu beiden Seiten des Mittelrohres (19) erstrecken, umfaßt.

3. Vorrichtung nach einem der Ansprüche 1 und 2, dadurch gekennzeichnet, daß die genannten Verdünnungsmittel einen perforiertem Konus (16) aufweisen, der am Ausgang des Zentralrohres (18) zwischen ihm und der Leitung (19) zur Evakuierung der Verbrennungsprodukte vorgesehen ist, um es dem Teil der Luft, der ins Äußere zurückgeführt wird, zu erlauben, in das Gebiet einzudringen, in dem die Verbrennungsprodukte sich bewegen.

4. Vorrichtung nach einem der Ansprüche 1 bis 3, dadurch gekennzeichnet, daß sie weiters einen zweiten Wärmetauscher (20) zwischen den Verbrennungsprodukten, die vom Brenner abgegeben werden, und der bereits im ersten Wärmetauscher (10) vorgewärmten Luft aufweist und dadurch, daß der zweite Wärmetauscher (20) von dem Typ ist, in dem Wasser rieselt, um die Feuchtigkeit der bereits erwärmten Verbrennungsluft zu erhöhen.

5. Vorrichtung nach Anspruch 4, dadurch gekennzeichnet, daß die Mittel (13, 14) dem ersten Wärmetauscher assoziiert sind und sich in Nachbarschaft des Ausganges der Leitung zur Evakuierung der Verbrennungsprodukte befinden, um die im letzteren gebildeten Kondensate zu sammeln und sie in den zweiten Wärmetauscher (20) zurückzuführen, wo sie das Rieselwasser bilden, welches dazu bestimmt ist, die Feuchtigkeit der vorgewärmten Verbrennungsluft zu erhöhen.

6. Vorrichtung nach Anspruch 5, dadurch gekennzeichnet, daß der zweite Wärmetauscher (20) ein Außenrohr (4), gebildet durch einen Teil der Luftzufuhrleitung zum Brenner (100) und ein koaxial dazu geführtes Innenrohr (9), welches von einem Teil der Leitung (9, 19), die die Verbrennungsgase evakuiert, gebildet wird, umfaßt, und dadurch, daß die Außenseite des Innenrohres (9) von einem porösen und hygrophilen Material (24) bedeckt ist, welches es dem Kondensationswasser erlaubt, herabzuriesen, und dadurch, daß das Innenrohr (9) aus einem Metall besteht, welches ein guter Wärmeleiter ist, und daß es im Inneren mit Längsflügeln (21, 23) oder mit Schikanen versehen ist.

7. Vorrichtung nach einem der Ansprüche 1 bis 6, dadurch gekennzeichnet, daß ein Ventilator (6) am Ende des ersten Wärmetauschers (10) im Fluß der Leitung (1, 2, 3) zur Luftzufuhr vorgesehen ist, und dadurch, daß die Mittel (8, 18) zum Trennen der Verbrennungsluft, die dazu bestimmt ist, zum Brenner zu gelangen, und des Teils, der dazu bestimmt ist, die Verdünnungsluft zu bilden, am Ausgang des Ventilators (6) angeordnet sind.

8. Vorrichtung nach einem der Ansprüche 1 und 2, dadurch gekennzeichnet, daß die genannten Verdünnungsmittel aus einem Venturimischer (36) bestehen, der am Ausgang der Leitung (19), zur Evakuierung der Verbrennungsprodukte angeordnet ist und auf die beiden Seiten des kreisringförmigen Gasstrahles, der durch die Verbrennungsprodukte gebildet wird, so einwirkt, daß er durch Saugen das Eindringen der im Zentralrohr (18) zurückgeführten Luft erlaubt.

9. Vorrichtung nach einem der Ansprüche 1 bis 8, dadurch gekennzeichnet, daß der erste Wärmetauscher (10) und die ihm zugeordneten Verdünnungsmittel (16, 36) an der Stelle einer Entlüftung, die den Kessel (100) mit der Außenluft verbindet, an der Fassade des Gebäudes vorgesehen sind.

Fig-1

Fig-2

Fig-3

Fig-4

Gaz

Brûleur

Fig. 5